# EUROPÄISCHE PATENTSCHRIFT

(11) **EP 1 952 947 B1**
(45) Veröffentlichungstag und Bekanntmachung des Hinweises auf die Patenterteilung: **22.07.2009**
(21) Anmeldenummer: 07002356.9
(22) Anmeldetag: 02.02.2007
(51) Int. Cl.: B25B 21/00, B23B 45/00

(54) **Kraftgetriebenes Handwerkzeug zum Bohren und/oder Schrauben**
Hand-held power driven tool for drilling and/or screwing
Outil à main motorisé permettant perçage et vissage

(43) Veröffentlichungstag der Anmeldung: 06.08.2008
(73) Patentinhaber: ERGOBIONIK GmbH, 46240 Bottrop (DE)
(72) Erfinder: Klingbeil, Thomas, 46240 Bottrop (DE)
(74) Vertreter: DR. STARK & PARTNER

(56) Entgegenhaltungen:
- WO-A-20/05049281
- WO-A-20/06108220
- WO-A2-02/26453
- DE-A1- 2 219 658
- DE-A1- 3 831 132
- US-A1- 2006 147 283
- US-B1- 6 506 002

## Beschreibung

Die Erfindung betrifft ein motorisch angetriebenes Handwerkzeug zum Bohren und/oder Schrauben, mit einem Gehäuse, in dem zum einen ein motorischer Antrieb mit daran angeschlossener, drehbar gelagerte Antriebswelle vorgesehen ist und an dem zum anderen ein Revolverkopf mittels einer Drehlagerung angeordnet ist, der mit zumindest zwei antreibbaren Kupplungsköpfen versehen ist, die sowohl in eine angetriebene aktive Position als auch in eine nicht angetriebene Parkposition verschwenkt werden können, wobei die Antriebswelle über zumindest ein Zwischenelement mit einem ersten Kupplungsteil im Revolverkopf verbunden ist und wobei jedem Kupplungskopf jeweils ein zweites Kupplungsteil zugeordnet ist, welches sich in der aktiven Position dieses Kupplungskopfes in Eingriff mit dem ersten Kupplungsteil befindet und welches sich in der Parkposition dieses Kupplungskopfes nicht in Eingriff mit dem ersten Kupplungsteil befindet. Solch ein Handwerkzeug ist beispielsweise aus der DE-A-3 831 132 bekannt.

Aus der Praxis sind derartige Handwerkzeuge bekannt, mit denen durch Drehung des Revolverkopfes ein Bohren und anschließendes Schrauben ohne Austausch des eingespannten Bohrers gegen ein Schraubbit erfolgen kann.

Nachteilig hierbei ist, dass für das Verdrehen des Revolverkopfes neben dem Deaktivieren einer Verdrehsicherung auch die Kraftübertragung zum Revolverkopf durch Lösen einer Kupplung entkoppelt werden muss. Dies ist in der Handhabung aufwändig, da hierzu regelmäßig umgegriffen werden muss, und stellt zudem einen erhöhten Dauteilaufwand dar.

Aufgabe der Erfindung ist es, die vorgenannten Nachteile zu vermeiden und ein Handwerkzeug der vorgenannten Art anzugeben, das ein Verdrehen des Revolverkopfes ohne aufwändiges Entkoppeln der Kraftübertragung zum Revolverkopf,

Diese Aufgabe wird dadurch gelöst, dass als ein Zwischenelement eine im Bereich der Drehlagerung des Revolverkopfes in den Revolverkopf hineingehende Zwischenantriebswelle vorgesehen ist, deren im Gehäuse befindliches Ende von der Antriebswelle angetrieben wird und deren im Revolverkopf befindliches Ende mit einem Kegelrad als ersten Kupplungsteil verbunden, insbesondere versehen ist, dessen Drehachse B nicht mit der Drehachse A der Drehlagerung des Revolverkopfes fluchtet, so dass dieses Kegelrad nicht auf der Drehachse A der Drehlagerung des Revolverkopfes angeordnet ist, und dass zum anderen das jeweilige zweite Kupplungsteil der Kupplungsköpfe als Kegelzahnrad ausgebildet ist, wobei das erste Kupplungsteil und die zweiten Kupplungsteile sowie die Position und Ausrichtung der Zwischenwelle so vorgesehen sind, dass nur das zweite Kupplungsteil des in der aktiven Position befindlichen Kupplungskopfes mit dem ersten Kupplungsteil in Eingriff ist.

Hierdurch wird bei Verdrehen des Revolverkopfes das zweite Kupplungsteil des bisher in der aktiven Position befindlichen Kupplungskopfes, welches sich bisher im Eingriff mit dem ersten Kupplungsteil befunden hat, aus diesem Eingriff heraus verschwenkt und somit automatisch ausgekuppelt. Durch Drehen eines weiteren Kupplungskopfes in die aktive Position wird dann dessen zweites Kupplungsteil in Eingriff mit dem ersten Kupplungsteil gebracht und somit automatisch eingekuppelt.

Dabei kann die Drehachse B des ersten Kupplungsteils in einem von der Lotrechten auf der Drehebene des Revolverkopfes abweichenden Winkel vorgesehen sein, so dass die Drehachse B des ersten Kupplungsteils weder mit der Drehachse A des Revolverkopfes fluchtet noch zu dieser parallel (versetzt) ist.

Auch kann die Drehachse B parallel versetzt zur Drehachse A des Revolverkopfes ausgerichtet sein und durch eine innerhalb der Drehlagerung vorgesehene Aussparung durchgeführt sein.

Vorzugsweise kann eine Verriegelungseinrichtung vorgesehen sein, die ein unbeabsichtigtes Verdrehen des Revolverkopfes verhindert und für jeden Kupplungskopf eine an dem Revolverkopf vorgesehene zugeordnete Aussparung sowie ein an dem Gehäuse vorgesehenes Verriegelungselement umfasst, wobei das Verriegelungselement zwischen einer in eine Aussparung eingreifenden und damit ein Verdrehen des Revolverkopfes verhindernden Verriegelungsposition und einer die Aussparung(en) freigebenden und ein Verdrehen des Revolverkopfes ermöglichenden Drehposition verlagerbar ist, wobei das Verriegelungselement durch eine Betätigungseinrichtung aus der Verriegelungsposition in die Drehposition verlagerbar ist, und wobei weiterhin der den motorischen Antrieb steuernde Einschalter derart mit dem Verriegelungselement gekoppelt ist, dass der Einschalter ebenfalls als Betätigungselement für die Verlagerung des Verriegelungselements zwischen der Verriegelungsposition und der Drehposition ausgebildet ist, so dass sich die Handhabung des Handwerkzeug einfacher gestaltet.

Dabei kann die Kopplung des den motorischen Antrieb steuernden Einschalters mit dem Verriegelungselement derart ausgestaltet sein, dass eine Betätigung der Betätigungsfläche des Einschalters nur dann möglich ist, wenn sich einer der Kupplungsköpfe des Revolverkopfes in seiner angetriebenen aktiven Position befindet und das Verriegelungselement in die Verriegelungsposition verlagerbar ist oder sich bereits in seiner Verriegelungsposition befindet, so dass eine Aktivierung des Antriebs bei nicht gegen Verdrehen gesichertem Revolverkopf nicht möglich ist und eine zusätzliche Betätigung einer separaten Betätigungseinrichtung für das Verriegelungselement nicht erforderlich ist.

Auch kann die Kopplung des den motorischen Antrieb steuernden Einschalters mit dem Verriegelungselement derart ausgestaltet sein, dass mit einem ersten Teilhub des Einschalters das Verriegelungselement in seine Verriegelungsposition verlagert wird und erst durch einen weiteren Hub des Einschalters die Aktivierung/Steuerung des motorischen Antriebs erfolgt, so dass ohne Betätigung des Einschalters der Revolverkopf frei drehbar ist.

Weiterhin kann die Betätigungseinrichtung mit dem Einschalter auch derart gekoppelt sein, dass das Verriegelungselement bei noch nicht betätigtem Einschalter lediglich einen Teil weit in die Aussparung eingreift und durch Betätigung des Einschalters weiter, insbesondere vollständig, in die' Aussparung hineinziehbar ist, so dass bereits vor Betätigung des Einschalters eine Sicherung gegen Verdrehen gegeben sein kann. Dabei kann das Verriegelungselement insoweit durch eine Rückstellkraft automatisch zumindest ein Stück in die Aussparung bringbar sein, wenn der Revolverkopf mit einem seiner Kupplungsköpfe in eine für den Betrieb erforderliche Verriegelungsposition gebracht worden ist.

Erfindungsgemäß kann der Einschalter eine der Betätigungsfläche gegenüberliegende weitere Betätigungsfläche zur Druckbeaufschlagung in einer der für die Motoraktivierung erforderliche Betätigung entgegen gesetzten Richtung aufweisen, wobei die weitere Betätigungsfläche mit dem Verriegelungselement derart gekoppelt ist, dass bei Drücken der weiteren Betätigungsfläche das Verriegelungselement aus seiner Verriegelungsposition in seine Drehposition verlagert wird und nicht mehr in eine der Aussparungen eingreift, so dass der Revolverkopf normalerweise gegen Verdrehen gesichert ist und zwar ein aktives Lösen des Verriegelungselements erforderlich ist, dies jedoch kein Loslassen des Griffs des Handwerkzeugs erfordert.

Vorteilhafterweise kann zumindest ein Kupplungskopf als Bohrfutter und wenigstens ein Kupplungskopf als Aufnahme für ein Schraubbit ausgebildet sein, wobei zwischen dem als Aufnahme für ein Schraubbit ausgebildeten Kupplungskopf und dem ihm zugeordneten zweiten Kupplungsteil ein Untersetzungsgetriebe, insbesondere in Form eines Planetengetriebes, vorgesehen ist, so dass eine Änderung der Motorsteuerung oder ein Umschalten eines im Gehäuse (und nicht im Revolverkopf) vorgesehenen Getriebes nicht erforderlich ist, was eine technisch einfachere Konstruktion ermöglicht.

Auch kann der als Aufnahme für ein Schraubbit ausgebildete Kupplungskopf eine Drehmomentbegrenzung, insbesondere in Form einer Rutschkupplung, aufweisen, so dass eine Überbelastung beim Schrauben vermieden und eine Beschädigung des Schraubbits und/oder der zu drehenden Schraube vermieden wird.

Im Folgenden wird ein in der Zeichnung dargestelltes Ausführungsbeispiel der Erfindung erläutert. Es zeigen:
- Fig. 1: Eine teilweise im Schnitt gehaltene Seitenansicht eines erfindungsgemäßen Handwerkzeuges und
- Fig. 2: einen in perspektivischer Darstellung gehaltene Ansicht des Gegenstandes nach Fig. 1, wobei der Übersichtlichkeit halber alle die Kraftübertragung betreffenden Bauteile nicht dargestellt sind.

In allen Figuren werden für gleiche bzw. gleichartige Bauteile übereinstimmende Bezugszeichen verwendet.

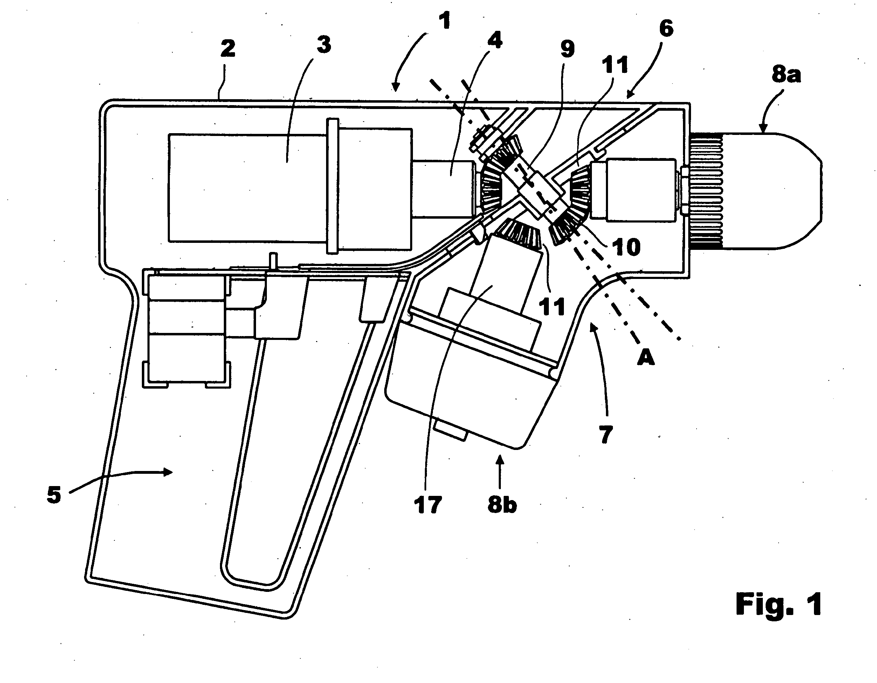

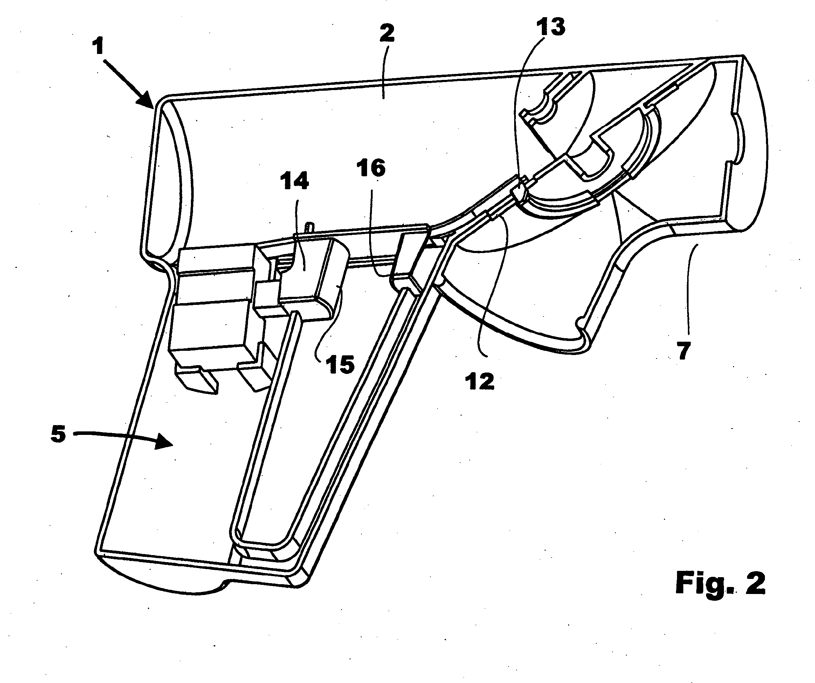

Fig. 1 zeigt ein motorisch angetriebenes Handwerkzeug 1, das sowohl zum Bohren als auch zum Schrauben verwendet werden kann. Das Handwerkzeug 1 umfasst ein Gehäuse 2, welches im dargestellten Ausführungsbeispiel - wie aus Fig. 2 auch ersichtlich - aus zwei seitlichen Teilehälften besteht.

In dem Gehäuse 2 ist ein motorischer Antrieb 3 vorgesehen, an den eine drehbar gelagerte Antriebswelle 4 angeschlossen ist. Das Gehäuse 2 umfasst einen Griffbereich 5 und einen vorderen Arbeitsbereich 6, der mit einem um eine Drehachse A drehbaren Revolverkopf 7 versehen ist.

Der Revolverkopf 7 umfasst wiederum im dargestellten Ausführungsbeispiel zwei antreibbare Kupplungsköpfe 8a und 8b, von denen der Kupplungskopf 8a als Bohrfutter und der Kupplungskopf 8b als Aufnahme für ein in der Zeichnung nicht dargestelltes Schraubbit ausgebildet ist.

Die Antriebswelle 4 ist über ein im dargestellten Ausführungsbeispiel als Zwischenantriebswelle ausgebildetes Zwischenelement 9 mit einem als Kegelzahnrad ausgebildeten ersten Kupplungsteil 10 verbunden, wobei sich das Zwischenelement vom Gehäuse 2 bis in den Revolverkopf 7 erstreckt und das erste Kupplungsteil 10 im Revolverkopf 7 angeordnet ist, Jeder der beiden drehbar gelagerten Kupplungsköpfe 8a und 8b umfasst wiederum ein ebenfalls als Kegelzahnrad ausgebildetes zweites Kupplungsteil 11, welches sich dann in Eingriff mit dem ersten Kupplungsteil 10 befindet, wenn der entsprechende Kupplungskopf 8a und 8b sich in seiner aktiven Position zur Benutzung befindet.

Hingegen ist das zweite Kupplungsteil 11 des nicht in Benutzung befindlichen Kupplungskopfes (im dargestellten Ausführungsbeispiel der Kupplungskopf 8b) nicht in Eingriff mit dem ersten Kupplungsteil 10.

Weiterhin ist eine Verriegelungseinrichtung vorgesehen, die ein unbeabsichtigtes Verdrehen des Revolverkopfes 7 verhindert. Hierfür ist an dem Revolverkopf 7 für jeden Kupplungskopf eine zugeordnete Aussparung 12 vorgesehen und an dem Gehäuse 2 ist ein Verriegelungselement 13 angeordnet, das zwischen einer in eine der Aussparungen 12 eingreifenden Verriegelungsposition und einer die Aussparungen 12 freigebenden und damit ein Verdrehen des Revolverkopfes 7 ermöglichen, Drehposition verlagerbar ist. Für eine leichtere Bedienbarkeit ist das Verriegelungselement 13 durch eine Betätigungseinrichtung aus der Verriegelungsposition in die Drehposition verlagerbar, wobei im dargestellten Ausführungsbeispiel die Betätigungseinrichtung durch den Einschalter 14, welcher den motorischen Antrieb 3 des Handwerkzeuges 1 steuert, gebildet ist.

Die Kopplung des Einschalters 14 mit dem Verriegelungselement 13 ist dabei derart ausgestaltet, dass einerseits eine Betätigung der Betätigungsfläche 15 des Einschalters 14 nur dann möglich ist, wenn sich einer der Kupplungsköpfe 8a bzw. 8b des Revolverkopfes 7 in seiner aktiven und damit antreibbaren Position befindet und sich somit das Verriegelungselement 13 in die zugeordnete Aussparung 12 des entsprechenden Kupplungskopfes 8a bzw. 8b befindet.

Damit ist auch bei noch nicht betätigtem Einschalter 14 bereits eine Verriegelung gegeben, so dass der Revolverkopf 7 nicht drehbar ist. Wie auch aus Fig. 2 ersichtlich, ist für eine Entriegelung der Einschalter 14 mit einer der für die Aktivierung des Antrieb zu betätigenden Betätigungsfläche 15 gegenüberliegenden weiteren Betätigungsfläche 16 versehen, die in entgegen gesetzter Richtung mit Druck beaufschlagt und damit in diese Richtung verlagert werden kann.

Im dargestellten Ausführungsbeispiel ist diese weitere Betätigungsfläche 16 des Einschalters 14 mit dem Verriegelungselement 13 derart gekoppelt, dass bei Drücken der weiteren Betätigungsfläche 16 das Verriegelungselement 13 aus seiner Verriegelungsposition in seiner Drehposition verlagert wird und dann nicht mehr in eine der Aussparungen 12 eingereift, so dass der Revolverkopf 7 dann frei drehbar ist.

Vorzugsweise kann diese Verlagerung zur Freigabe gegen eine Rückstellkraft, beispielsweise verursacht durch eine Feder oder dergleichen, erfolgen, so dass bei Erreichen einer Aussparung 12 das Verriegelungselement 13 automatisch zumindest mit einem Teilbereich in diese Aussparung 12 hinein verlagert wird und damit eine selbsttätige Verriegelung erfolgt. Dies ist insbesondere bei lediglich zwei Kupplungsköpfen 8a und 8b sinnvoll.

Die Kopplung des Einschalters 14 mit dem Verriegelungselement 13 ist dabei dadurch verwirklicht, dass der Einschalter 14 über ein Verbindungselement, dass sowohl Zugkräfte als auch Druckkräfte übertragen kann, mit dem Verriegelungselement 13 verbunden ist. Im dargestellten Ausführungsbeispiel handelt es sich bei diesem Verbindungselement um einen zwar verbiegbaren, aber ansonsten eine relativ hohe Steifigkeit aufweisenden Kunststoffstreifen, der einstückig mit dem Einschalter 14 und dem Verriegelungselement 13 ausgebildet ist und somit auch die Betätigungsfläche 15 und die weitere Betätigungsfläche 16 umfasst.

Dem als Aufnahme für ein Schraubbit ausgebildeten Kupplungskopf 8b ist im dargestellten Ausführungsbeispiel ein Untersetzungsgetriebe 17 zugeordnet, das zwischen dem Kupplungskopf 8b und dem ihm zugeordneten zweiten Kupplungsteil 11 vorgesehen ist und die hohe Drehzahl des motorischen Antriebs 3 auf eine niedrigere Drehzahl herabsenkt. Darüber hinaus weist dieser Kupplungskopf 8b eine Drehmomentbegrenzung auf, die insbesondere in Form einer Rutschkupplung ausgebildet sein kann.

## Patentansprüche

1. Motorisch angetriebenes Handwerkzeug (1) zum Bohren und/oder Schrauben, mit einem Gehäuse (2), in dem zum einen ein motorischer Antrieb (3) mit daran angeschlossener, drehbar gelagerte Antriebswelle (4) vorgesehen ist und an dem zum anderen ein Revolverkopf (7) mittels einer Drehlagerung angeordnet ist, der mit zumindest zwei antreibbaren Kupplungsköpfen (8a, 8b) versehen ist, die sowohl in eine angetriebene aktive Position als auch in eine nicht angetriebene Parkposition verschwenkt werden können, wobei die Antriebswelle (4) über zumindest ein Zwischenelement (9) mit einem ersten Kupplungsteil (10) im Revolverkopf (7) verbunden ist und wobei jedem Kupplungskopf (8a, 8b) jeweils ein zweites Kupplungsteil zugeordnet ist, welches sich in der aktiven Position dieses Kupplungskopfes (8a, 8b) in Eingriff mit dem ersten Kupplungsteil (10) befindet und welches sich in der Parkposition dieses Kupplungskopfes (8a, 8b) nicht in Eingriff mit dem ersten Kupplungsteil (10) befindet, **dadurch gekennzeichnet, dass** als ein Zwischenelement (9) eine im Bereich der Drehlagerung des Revolverkopfes (7) in den Revolverkopf (7) hineingehende Zwischenantriebswelle vorgesehen ist, deren im Gehäuse (2) befindliches Ende von der Antriebswelle (4) angetrieben wird und deren im Revolverkopf (7) befindliches Ende mit einem Kegelrad als ersten Kupplungsteil (10) verbunden, insbesondere versehen ist, dessen Drehachse B nicht mit der Drehachse A der Drehlagerung des Revolverkopfes (7) fluchtet, so dass dieses Kegelrad nicht auf der Drehachse A der Drehlagerung des Revolverkopfes (7) angeordnet ist, und dass zum anderen das jeweilige zweite Kupplungsteil (11) der Kupplungsköpfe (8a, 8b) als Kegelzahnrad ausgebildet ist, wobei das erste Kupplungsteil (11) und die zweiten Kupplungsteile (11) sowie die Postition und Ausrichtung der Zwischenwelle so vorgesehen sind, dass nur das zweite Kupplungsteil (11) des in der aktiven Position befindlichen Kupplungskopfes (8a, 8b) mit dem ersten Kupplungsteil (10) in Eingriff ist.

2. Handwerkzeug (1) nach dem vorhergehenden Anspruch, **dadurch gekennzeichnet, dass** die Drehachse B des ersten Kupplungsteils (10) in einem von der Lotrechten auf der Drehebene A des Revolverkopfes (7) abweichenden Winkel vorgesehen ist.

3. Handwerkzeug (1) nach Anspruch 1, **dadurch gekennzeichnet, dass** die Drehachse B parallel versetzt zur Drehachse A des Revolverkopfes (7) ausgerichtet ist und durch eine innerhalb der Drehlagerung vorgesehene Aussparung (12) durchgeführt ist.

4. Handwerkzeug (1) nach einem der vorhergehenden Ansprüche, **dadurch gekennzeichnet, dass** eine Verriegelungseinrichtung vorgesehen ist, die ein unbeabsichtigtes Verdrehen des Revolverkopfes (7) verhindert und für jeden Kupplungskopf (8a, 8b) eine an dem Revolverkopf (7) vorgesehene zugeordnete Aussparung (12) sowie ein an dem Gehäuse (2) vorgesehenes Verriegelungselement (13) umfasst, wobei das Verriegelungselement (13) zwischen einer in eine Aussparung (12) eingreifenden und damit ein Verdrehen des Revolverkopfes (7) verhindernden Verriegelungsposition und einer die Aussparung(en) (12) freigebenden und ein Verdrehen des Revolverkopfes (7) ermöglichenden Drehposition verlagerbar ist, wobei das Verriegelungselement (13) durch eine Betätigungseinrichtung aus der Verriegelungsposition in die Drehposition verlagerbar ist, wobei weiterhin -der den motorischen Antrieb (3) steuernde Einschalter (14) derart mit dem Verriegelungselement (13) gekoppelt ist, dass der Einschalter (14) ebenfalls als Betätigungselement für die Verlagerung des Verriegelungselements (13) zwischen der Verriegelungsposition und der Drehposition ausgebildet ist.

5. Handwerkzeug (1) nach dem vorhergehenden Anspruch, **dadurch gekennzeichnet, dass** die Kopplung des den motorischen Antrieb (3) steuernden Einschalters (14) mit dem Verriegelungselement (13) derart ausgestaltet ist, dass eine Betätigung der Betätigungsfläche (15) des Einschalters (14) nur dann möglich ist, wenn sich einer der Kupplungsköpfe (8a, 8b) des Revolverkopfes (7) in seiner angetriebenen aktiven Position befindet und das Verriegelungselement (13) in die Verriegelungsposition verlagerbar ist oder sich bereits in seiner Verriegelungsposition befindet.

6. Handwerkzeug (1) nach Anspruch 4 oder 5, **dadurch gekennzeichnet, dass** die Kopplung des den motorischen Antrieb (3) steuernden Einschalters (14) mit dem Verriegelungselement (13) derart ausgestaltet ist, dass mit einem ersten Teilhub des Einschalters (14) das Verriegelungselement (13) in seine Verriegelungsposition verlagert wird und erst durch einen weiteren Hub des Einschalters (14) die Aktivierung/Steuerung des motorischen Antriebs (3) erfolgt.

7. Handwerkzeug (1) nach einem der Ansprüche 4 bis 6, **dadurch gekennzeichnet, dass** die Betätigungseinrichtung mit dem Einschalter (14) derart gekoppelt ist, dass das Verriegelungselement (13) bei noch nicht betätigtem Einschalter (14) lediglich einen Teil weit in die Aussparung (12) eingreift und durch Betätigung des Einschalters (14) weiter, insbesondere vollständig, in die Aussparung (12) hineinziehbar ist.

8. Handwerkzeug (1) nach einem der vorhergehenden Anspruche, **dadurch gekennzeichnet, dass** der Einschalter (14) eine der Betätigungsfläche (15) gegenüberliegende weitere Betätigungsfläche (16) zur Druckbeaufschlagung in entgegen gesetzter Richtung aufweist, wobei die weitere Betätigungsfläche (16) mit dem Verriegelungselement (13) derart gekoppelt ist, dass bei Drücken der weiteren Betätigungsfläche (16) das Verriegelungselement (13) aus seiner Verriegelungsposition in seine Drehposition verlagert wird und nicht mehr in eine der Aussparungen (12) eingreift.

9. Handwerkzeug (1) nach einem der vorhergehenden Ansprüche, **dadurch gekennzeichnet, dass** zumindest ein Kupplungskopf (8a) als Bohrfutter und wenigstens ein Kupplungskopf (8b) als Aufnahme für ein Schraubbit ausgebildet ist, wobei zwischen dem als Aufnahme für ein Schraubbit ausgebildeten Kupplungskopf (8b) und dem ihm zugeordneten zweiten Kupplungsteil (11) ein Untersetzungsgetriebe (17), insbesondere in Form eines Planetengetriebes, vorgesehen ist.

10. Handwerkzeug (1) nach dem vorhergehenden Anspruch, **dadurch gekennzeichnet, dass** der als Aufnahme für ein Schraubbit ausgebildete Kupplungskopf (8b) eine Drehmomentbegrenzung, insbesondere in Form einer Rutschkupplung, aufweist.

## Claims

1. Hand-held power driven tool (1) for drilling and/or screwing, with a housing (2), in which firstly a motor drive (3) with a rotationally arranged drive shaft (4) attached thereto is provided, and on which secondly a turret (7) is arranged by means of a pivot bearing, said turret being provided with at least two driveable coupling heads (8a, 8b) which can be pivoted both into a driven active position and also into a nondriven, idle position, while the drive shaft (4) is connected via at least one intermediate element (9) with a first coupling part (10) in the turret (7) and a second coupling part is assigned to each coupling head (8a, 8b), which, in the active position of this coupling head (8a, 8b) engages with the first coupling part (10) and which in the idle position of this coupling head (8a, 8b) is not engaged with the first coupling part (10), **characterised in that** an intermediate drive shaft passing into the turret (7) is provided as an intermediate element (9) in the area of the pivot bearing of the turret (7), the end thereof which is located inside the housing (2) being driven by the drive shaft (4) and the end thereof which is located in the turret (7) being connected with a bevel gear as first coupling part (10), the axis of rotation B of which is not aligned with the axis of rotation A of the pivot bearing of the turret (7), so that this bevel gear is not arranged on the axis of rotation A of the pivot bearing of the turret (7), and that secondly the respective second coupling part (11) of the coupling heads (8a, 8b) is in the form of a bevel wheel, while the first coupling part (10) and the second coupling parts (11) and the position and the alignment of the intermediate shaft are provided such that only the second coupling part (11) of the coupling head (8a, 8b) which is in the active position engages with the first coupling part (10).

2. Hand-held tool (1) according to the preceding claim, **characterised in that** the axis of rotation B of the first coupling part (10) is provided at an angle deviating from the perpendicular on the plane of rotation A of the turret (7).

3. Hand-held tool (1) according to claim 1, **characterised in that** the axis of rotation B is aligned offset in parallel to the axis of rotation A of the turret (7) and is guided through a recess (12) provided within the pivot bearing.

4. Hand-held tool (1) according to one of the preceding claims, **characterised in that** a locking device is provided which prevents any unintentional rotation of the turret (7) and includes a recess (12) provided on the turret (7) assigned to each coupling head (8a, 8b) and also a locking element (13) provided on the housing (2), the locking element (13) being displaceable between a locking position engaging in a recess (12) and thereby preventing any rotation of the turret (7), and a rotation position releasing the recess(es) (12) and enabling rotation of the turret (7), while the locking element (13) is displaceable by an actuation device out of the locking position into the rotation position, while the circuit closer (14) controlling the motor drive (3) is still coupled with the locking element (13) in such a way that the circuit closer (14) is also designed as an actuation element for the displacement of the locking element (13) between the locking position and the rotation position.

5. Hand-held tool (1) according to the preceding claim, **characterised in that** the coupling of the circuit closer (14) controlling the motor drive (3) with the locking element (13) is designed such that actuation of the operational area (15) of the circuit closer (14) is only possible when one of the coupling heads (8a, 8b) of the turret (7) is in its driven active position and the locking element (13) is displaceable into the locking position or is already in its locking position.

6. Hand-held tool (1) according to claim 4 or 5, **characterised in that** the coupling of the circuit closer (14) controlling the motor drive (3) with the locking element (13) is designed such that with a first partial movement of the circuit closer (14), the locking element (13) is moved into its locking position and the activation/ control of the motor drive (3) only occurs as the result of a further movement of the circuit closer (14).

7. Hand-held tool (1) according to one of claims 4 to 6, **characterised in that** the actuation device is coupled with the circuit closer (14) in such a way that when the circuit closer (14) has not yet been actuated, the locking element (13) engages only partly into the recess (12) and by actuating the circuit closer (14) further, in particular completely, can be moved into the recess (12).

8. Hand-held tool (1) according to one of the preceding claims, **characterised in that** the circuit closer (14) has a further operational area (16) located opposite the operational area (15) for applying pressure in the opposite direction, while the further operational area (16) is coupled with the locking element (13) in such a way that when the further operational area (16) is pressed, the locking element (13) is displaced out of its locking position into its rotation position and no longer engages in one of the recesses (12).

9. Hand-held tool (1) according to one of the preceding claims, **characterised in that** at least one coupling head (8a) is designed as a drill chuck and at least one coupling head (8b) is designed as a receiver for a screw bit wherein a reduction gear (17), especially in the form of a planetary gear train, is provided between the coupling head (8b) that is in the form of a receiving means for a screw bit and the second coupling part (11) associated therewith.

10. Hand-held tool (1) according to the preceding claim, **characterised in that** the coupling head (8b) in the form of a receiving means for a screw bit has a torque limiting means, especially in the form of a sliding clutch.

## Revendications

1. Outil manuel (1) à entraînement motorisé, conçu pour le perçage et/ou le vissage et comportant un carter (2) dans lequel, d'une part, est prévu un entraînement motorisé (3) auquel est rattaché un arbre menant (4) monté à rotation, et sur lequel, d'autre part, une tête revolver (7) est implantée au moyen d'un système de montage rotatif et est dotée d'au moins deux têtes d'accouplement entraînables (8a, 8b) pouvant être amenées, par pivotement, tant à une position menée opérante qu'à une position d'attente exemple d'entraînement, l'arbre menant (4) étant relié, par l'intermédiaire d'au moins un élément intercalaire (9), à une première partie d'accouplement (10) située dans la tête revolver (7), et chaque tête d'accouplement (8a, 8b) étant respectivement associée à une seconde partie d'accouplement qui, dans la position opérante de cette tête d'accouplement (8a, 8b), est en prise avec la première partie d'accouplement (10), et n'est pas en prise avec ladite première partie d'accouplement (10) dans la position d'attente de cette tête d'accouplement (8a, 8b), **caractérisé par** la présence, en tant qu'élément intercalaire (9), d'un arbre menant intermédiaire qui s'engage dans la tête revolver (7) dans la région du système de montage rotatif de ladite tête revolver (7), arbre dont l'extrémité située dans le carter (2) est entraînée par l'arbre menant (4), et dont l'extrémité située dans la tête revolver (7) est reliée à une roue conique remplissant la fonction de la première partie d'accouplement (10), et est notamment munie de ladite roue, l'axe de rotation B de ladite roue ne coïncidant pas avec l'axe de rotation A du système de montage rotatif de ladite tête revolver (7), de sorte que cette roue conique ne se trouve pas sur l'axe de rotation A dudit système de montage rotatif de ladite tête revolver (7) ; et par le fait que, d'autre part, la seconde partie respective d'accouplement (11) des têtes d'accouplement (8a, 8b) est réalisée sous la forme d'un pignon conique, sachant que la première partie d'accouplement (10) et les secondes parties d'accouplement (11), ainsi que la position et l'orientation de l'arbre intermédiaire, sont prévues de façon telle que seule soit en prise, avec ladite première partie d'accouplement (10), la seconde partie d'accouplement (11) de la tête d'accouplement (8a, 8b) occupant la position opérante.

2. Outil manuel (1) selon la revendication précédente, **caractérisé par le fait que** l'axe de rotation B de la première partie d'accouplement (10) est prévu selon un angle s'écartant de la perpendiculaire au plan de rotation A de la tête revolver (7).

3. Outil manuel (1) selon la revendication 1, **caractérisé par le fait que** l'axe de rotation B est orienté avec décalage parallèle vis-à-vis de l'axe de rotation A de la tête revolver (7), et traverse un évidement (12) prévu à l'intérieur du système de montage rotatif.

4. Outil manuel (1) selon l'une des revendications précédentes, **caractérisé par** la présence d'un système de verrouillage qui interdit une rotation involontaire de la tête revolver (7) et englobe, pour chaque tête d'accouplement (8a, 8b), un évidement associé (12) prévu sur ladite tête revolver (7), ainsi qu'un élément de verrouillage (13) prévu sur le carter (2), sachant que ledit élément de verrouillage (13) est mobile entre une position de verrouillage pénétrant dans un évidement (12) et interdisant ainsi une rotation de la tête revolver (7), et une position de rotation libérant l'évidement ou les évidements (12), et autorisant une rotation de ladite tête revolver (7) ; sachant que ledit élément de verrouillage (13) peut être déplacé de la position de verrouillage à la position de rotation par l'intermédiaire d'un système d'actionnement ; et sachant en outre que l'enclencheur (14), commandant l'entraînement motorisé (3), est couplé audit élément de verrouillage (13) de façon telle que ledit enclencheur (14) soit semblablement réalisé sous la forme d'un élément d'actionnement affecté au déplacement dudit élément de verrouillage (13) entre la position de verrouillage et la position de rotation.

5. Outil manuel (1) selon la revendication précédente, **caractérisé par le fait que** le couplage, entre l'élément de verrouillage (13) et l'enclencheur (14) commandant l'entraînement motorisé (3), est conçu de telle sorte qu'un actionnement de la surface de manoeuvre (15) dudit enclencheur (14) soit possible uniquement lorsque l'une des têtes d'accouplement (8a, 8b) de la tête revolver (7) occupe sa position menée opérante et lorsque ledit élément de verrouillage (13) peut être amené à la position de verrouillage, ou bien occupe déjà sa position de verrouillage.

6. Outil manuel (1) selon la revendication 4 ou 5, **caractérisé par le fait que** le couplage, entre l'élément de verrouillage (13) et l'enclancheur (14) commandant l'entraînement motorisé (3), est conçu de telle sorte que ledit élément de verrouillage (13) soit amené à sa position de verrouillage par une première course partielle dudit enclencheur (14), et que l'activation/commande dudit entraînement motorisé (3) s'opère uniquement par une course supplémentaire dudit enclencheur (14).

7. Outil manuel (1) selon l'une des revendications 4 à 6, **caractérisé par le fait que** le système d'actionnement est couplé à l'enclencheur (14) de telle sorte que l'élément de verrouillage (13) ne pénètre que pour une part dans l'évidement (12), lorsque ledit enclencheur (14) n'est pas encore manoeuvré, et puisse être enfoncé davantage, en particulier intégralement dans ledit évidement (12) suite à une manoeuvre dudit enclencheur (14).

8. Outil manuel (1) selon l'une des revendications précédentes, **caractérisé par le fait que** l'enclencheur (14) comporte une autre surface de manoeuvre (16) située en vis-à-vis de la surface de manoeuvre (15), en vue d'une sollicitation à la pression dans une direction opposée, ladite autre surface de manoeuvre (16) étant couplée à l'élément de verrouillage (13) de façon telle que, lorsqu'une pression est exercée sur ladite autre surface de manoeuvre (16), ledit élément de verrouillage (13) soit déplacé de sa position de verrouillage à sa position de rotation, et ne pénètre plus dans l'un des évidements (12).

9. Outil manuel (1) selon l'une des revendications précédentes, **caractérisé par le fait qu'**au moins une tête d'accouplement (8a) est réalisée sous la forme d'un mandrin de serrage, et au moins une tête d'accouplement (8b) est réalisée sous la forme d'un logement destiné à un embout de vissage, une transmission démultiplicatrice (17), se présentant notamment comme un engrenage planétaire, étant prévue entre ladite tête d'accouplement (8b), réalisée sous la forme d'un logement destiné à un embout de vissage, et la seconde partie d'accouplement (11) qui lui est associée.

10. Outil manuel (1) selon la revendication précédente, **caractérisé par le fait que** la tête d'accouplement (8b), réalisée sous la forme d'un logement destiné à un embout de vissage, comporte une limitation de couples de rotation revêtant, en particulier, la forme d'un accouplement patinant.
